(19) Europäisches Patentamt
European Patent Office
Office européen des brevets

(11) **EP 2 933 238 B1**

(12) **EUROPÄISCHE PATENTSCHRIFT**

(45) Veröffentlichungstag und Bekanntmachung des Hinweises auf die Patenterteilung:
**27.12.2017 Patentblatt 2017/52**

(51) Int Cl.:
***C03B 37/012*** *(2006.01)*   ***G02B 6/02*** *(2006.01)*
***H01S 3/067*** *(2006.01)*

(21) Anmeldenummer: **15163788.1**

(22) Anmeldetag: **16.04.2015**

(54) **HERSTELLUNGSVERFAHREN FÜR EINE VORFORM FÜR EINEN LICHTWELLENLEITER MIT EINEM NICHT-RUNDEN KERN UND EINEM DOTIERTEN MANTELBEREICH MIT VORGEGEBENER NUMERISCHER APERTUR**

MANUFACTURING METHOD FOR AN OPTICAL FIBRE PREFORM WITH A NON CIRCULAR CORE AND A DOPED CLADDING HAVING A PREDETERMINED NUMERICAL APERTURE

PROCÉDÉ DE FABRICATION D'UNE PRÉFORME DE FIBRE OPTIQUE À COEUR NON CIRCULAIRE ET MANTEAU DOPÉ, AYANT UNE OUVERTURE NUMÉRIQUE DONNÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.04.2014 DE 102014207371**
**15.04.2015 DE 102015206790**

(43) Veröffentlichungstag der Anmeldung:
**21.10.2015 Patentblatt 2015/43**

(73) Patentinhaber: **j-plasma GmbH**
**07751 Jena (DE)**

(72) Erfinder:
• **Rosenow, Ralitsa**
**07749 Jena (DE)**
• **Hanf, Robert**
**07607 Eisenberg (DE)**
• **Heinze, Roland**
**07743 Jena (DE)**
• **Kötzing, Jörg**
**07747 Jena (DE)**
• **Brehm, Lothar**
**07743 Jena (DE)**

(74) Vertreter: **Kruspig, Volkmar**
**Meissner Bolte Patentanwälte**
**Rechtsanwälte Partnerschaft mbB**
**Geschwister-Scholl-Strasse 15**
**07545 Gera (DE)**

(56) Entgegenhaltungen:
**WO-A2-2010/138747     US-A1- 2005 265 678**

• LIU A ET AL: "PROPAGATION LOSSES OF PUMP LIGHT IN RECTANGULAR DOUBLE-CLAD FIBERS", OPTICAL ENGINEERING, SOC. OF PHOTO-OPTICAL INSTRUMENTATION ENGINEERS, BELLINGHAM, Bd. 35, Nr. 11, 1. November 1996 (1996-11-01), Seiten 3130-3133, XP000638609, ISSN: 0091-3286, DOI: 10.1117/1.601052

EP 2 933 238 B1

**Beschreibung**

Unter einem Lichtwellenleiter werden nachfolgend gleichermaßen Lichtleitfasern und und Lichtleitstäbe verstanden. Nichtrunde Kerne werden in derartigen Lichtwellenleitern verwendet, um zum Beispiel die Modenmischung zu verbessern. Das kann dazu genutzt werden, um Strahlprofile zu homogenisieren oder auch die Einkoppeleffizienz von Pumplicht in aktiven Laserfasern zu erhöhen. Die Verwendung von nicht-runden Kernformen bringt allerdings auch einige Nachteile mit sich. Die Nachteile resultieren vorwiegend aus der Modenmischung. Diese führt dazu, dass bestimmte Modengruppen, die vorwiegend in den Randbereichen des Faserkerns propagieren, eine erhöhte Dämpfung aufweisen. Dieser Effekt tritt dann besonders stark auf, wenn die Eckenverrundung des Kernstabes minimal ist. Außerdem geht neben der erhöhten Dämpfung auch ein Absinken der numerischen Apertur einher. Nachfolgend wird der Begriff "numerische Apertur" durch NA abgekürzt.

In vielen Anwendungen ist es sehr wichtig, eine bestimmte NA zu erreichen. Die Höhe der NA eines Lichtwellenleiters kann prinzipiell durch den Brechzahlunterschied zwischen dem Kernbereich und dem Mantelbereich eingestellt werden. Für runde Kerne ist es möglich, aus diesem Brechzahlunterschied die NA des Lichtwellenleiters zu berechnen. Wenn beispielsweise ein undotiertes Kernmaterial verwendet wird und der Mantelbereich mit Fluor dotiert werden soll, kann aus der benötigten Brechzahldifferenz die notwendige Konzentration an Fluor im Mantelbereich berechnet und bei der Herstellung der Vorform eingestellt werden.

Dieses einfache Vorgehen führt jedoch bei nicht-runden Kerngeometrien auf Grund der eingangs beschriebenen zusätzlichen Verluste durch die Modenmischung nicht zum Erfolg.

Aus dem Stand der Technik sind verschiedene Verfahren für die Herstellung von nicht-runden Kernen bekannt.

In der US 4,859,223 wird ein Verfahren angegeben, bei dem zuerst ein Kernbereich hergestellt wird und danach mechanisch äußere Bereiche abgetragen werden, um den nicht-runden Kern zu fertigen. Anschließend wird ein Mantelbereich aufgebracht und die Vorform zu einer Faser verzogen. Damit werden wünschenswerte Eigenschaften in Bezug auf die Polarisationserhaltung bestimmter Moden erreicht.

Die US 5,566,267 beschreibt ein Herstellungsverfahren für Fasern mit Seitenverhältnissen, die an eine Laserquelle angepasst sind. Damit wird eine besonders hohe Koppeleffizienz erreicht. Außerdem wird eine erhöhte Leistungsdichte erreicht. Beim verwendeten Plasmaabscheideverfahren wird beschrieben, dass die Abscheidung bevorzugt an den langen Kanten und kaum an den Eckbereichen erfolgt.

Die DE 10 2009 004 756 A1 beschreibt ein Verfahren, bei dem ein rechteckiger Kernstab mit einem Mantelrohr umfangen wird. Dadurch wird die thermische Belastung reduziert und eine verbesserte Eckigkeit erhalten.

In der DE 10 2013 202 589 A1 wird ein Verfahren zur Herstellung von Vorformen mit nicht-runden Kernen beschrieben, bei dem mittels thermischer Abscheidung der Mantelbereich aufgebracht wird. Dabei verrunden die Eckbereiche, so dass in einem weiteren Prozessschritt ein erneutes mechanisches Begradigen erforderlich ist.

Die US 8,655,130 beschreibt ein Herstellungsverfahren für Vorformen mit nicht-runden Kernen und sehr geringen Eckenverrundungen. Das wird dort durch die Verwendung einer modifizierten plasmabasierten Innenabscheidung erreicht. Damit lassen sich Fasern mit sehr guter Eckigkeit herstellen. Durch die sehr gute Eckigkeit wird allerdings ein gewisser Teil der Lichtenergie aus dem Faserkern ausgekoppelt, so dass daraus eine erhöhte Dämpfung resultiert.

In der WO 14023799 Alwird ein Verfahren beschrieben, bei dem eine möglichst homogene Dotandenkonzentration im Mantelbereich dadurch erreicht wird, dass unter ersten Abscheidebedingungen eine erste Mantelschicht zum Auffüllen der Talbereiche zwischen den Ecken abgeschieden wird. Danach wird die Vorform rund geschliffen und für die Abscheidung der zweiten Mantelschicht vorbereitet. Diese wird dann unter Abscheidebedingungen aufgebracht, die mit den ersten identisch sein können, aber nicht müssen. Es wird darauf ausgerichtet, dass die Dotandenkonzentration in der zweiten Mantelschicht identisch mit der ersten Mantelschicht ist. Allerdings besteht bei all diesen Fertigungsverfahren weiterhin das Problem, dass die für die Herstellung des Lichtwellenleiters bestimmte Vorform hinsichtlich der Dotandenkonzentration in den einzelnen Teilschichten aufgrund der später im Lichtwellenleiter unter den geometrischen Bedingungen des Faserkerns auftretenden optischen Effekte, insbesondere der Modenmischungen, häufig nicht die geforderte numerische Apertur des Lichtwellenleiters sichert.

Somit besteht die Aufgabe darin, eine Vorform für Lichtwellenleiter mit nicht-runden Kernen so herzustellen, dass damit eine vorgegebene NA des aus dieser Vorform gefertigten Lichtwellenleiters sicher erreicht werden kann und ein entsprechendes Fertigungsverfahren anzugeben. Weiterhin wird eine Vorform für einen Lichtwellenleiter beschrieben, mit dem es gelingt, im fertigen Lichtwellenleiter eine geforderte NA genau einzustellen.

Die Aufgabe wird mit einem Verfahren zur Fertigung einer Vorform zur Herstellung eines Lichtwellenleiters mit den Merkmalen des Anspruchs 1 gelöst. Die jeweiligen Unteransprüche enthalten zweckmäßige bzw. vorteilhafte Ausgestaltungen des Verfahrens Bei dem Verfahren zur Fertigung einer Vorform zur Herstellung eines Lichtwellenleiters, enthaltend einen Mantelbereich und einen Vorformkern mit einem nicht-runden, insbesondere polygonalen Querschnitt ist ein Wert für die numerische Apertur (NA) vorgegeben, den der zu fertigende Lichtwellenleiter aufweisen muss.

Das Verfahren umfasst die nachfolgenden Verfahrensschritte:

Es wird zu Beginn eine effektive Dotandenkonzentration des Mantelbereichs für den zu fertigenden Lichtwellenleiter aus der vorgegebenen numerischen Apertur ermittelt.

In einem zweiten Verfahrensschritt erfolgt ein Einstellen einer nominalen Dotandenkonzentration zur Fertigung des Mantelbereichs. Dabei wird die nominale Dotandenkonzentration aus der effektiven Dotandenkonzentration in Abhängigkeit von Parametern bestimmt, die den Faseraufbau des Lichtwellenleiters beschreiben. Diese Parameter sind die vorgesehene Kerngeometrie des Lichtwellenleiters und/oder mechanische Parameter des Faseraufbaus des zu fertigenden Lichtwellenleiters.

In einem dritten Verfahrensschritt wird der Vorformkern mit der vorgesehenen Geometrie des Querschnitts der Vorform hergestellt. Es erfolgt anschließend ein Umgeben des Vorformkerns mit einem Mantelbereich mit der nominalen Dotandenkonzentration.

Die effektive Dotandenkonzentration $c_{eff}$ und die nominale Dotandenkonzentration $c_{nom}$ und der Skalierungsfaktor F werden dabei erfindungsgsgemäß über die folgende Beziehung verknüpft: $c_{eff} \cdot F \leq c_{nom}$. Dabei wird der Skalierungsfaktor F mit einer Parametermenge V, C, S und N über die Beziehung

$$F = V \cdot (1 + (C - 1) \cdot N) \cdot (1 + (S - 1) \cdot N)$$

berechnet. Dabei ist V ein Maß für eine Eckenverrundung, C beschreibt einen Einfluss eines Coatings des Lichtwellenleiters, N ist eine Eckenanzahl des Kerns und S beschreibt einen Einfluss einer Sperrschicht.

Bei einer ersten Ausführungsform wird die nominale Dotandenkonzentration im Vergleich zur effektiven Dotandenkonzetration erhöht, wobei zum Ermitteln des Grades der Erhöhung der effektiven Dotandenkonzentration auf die nominale Dotandenkonzentration eine Auswertung eines eine Eckenverrundung V des nicht-runden Querschnitts beschreibenden Parameters ausgeführt wird.

Es hat sich gezeigt, dass vor allem der Parameter der Eckenverrundung einen beträchtlichen Einfluss auf die numerische Apertur des Lichtwellenleiters und somit auf die entsprechend erforderliche nominale Dotandenkonzentration hat.

Bei einer weiteren Ausführungsform wird die nominale Dotandenkonzentration im Vergleich zur effektiven Dotandenkonzetration erhöht, wobei die Erhöhung der Dotandenkonzentration zusätzlich zu dem Parameter der Eckenverrundung V aus einer Eckenanzahl N sowie aus den Parametern C und S bestimmt wird, die einen Einfluss eines vorgesehenen Coatings (Parameter C) und einer Sperrschicht (Parameter S) beschreiben. Hierdurch können weitere Feinanpassungen der nominalen Dotandenkonzentration erfolgen.

Der Parameter S des Einflusses der Sperrschicht wird bei einer zweckmäßigen Ausführung des Verfahrens aus den thermischen Ausdehnungskoeffizienten $CTE_S$ des Materials der Sperrschicht und des thermischen Ausdehnungskoeffizienten $CTE_C$ des Claddings des herzustellenden Lichtwellenleiters bestimmt.

Der Parameter V der Eckenverrundung ergibt sich bei einer Ausführung des Verfahrens aus drei beschreibenden Kenngrößen, nämlich einem den nicht-runden Querschnitt einbeschreibenden Außendurchmesser Ad, einem in den unrunden Querschnitt einbeschriebenen Innendurchmesser Id und einer Eckenzahl N des nicht-runden Kerns.

Bei einer Ausführungsform des Verfahrens wird dem Herstellen der Vorform auf den unrunden Vorformkern ein Mantelbereich mit einem an die Querschnittsgeometrie des Vorformkerns angepassten Mantelquerschnitt so aufgebracht, dass das Kern-Mantel-Verhältnis über den gesamten Querschnitt der Vorform konstant ist.

Dadurch wird berücksichtigt, dass die numerische Apertur des Lichtwellenleiters zu einem nicht unerheblichen Maße vom so genannten Kern-Mantel-Verhältnis bestimmt wird. Das überall auf dem gesamten Querschnitt der Vorform konstante Kern-Mantel-Verhältnis impliziert, dass auch der Mantelbereich der Vorform einen Querschnitt aufweist, der dem des Kerns der Vorform zumindest ähnlich ist. Das bedeutet insbesondere, dass der Querschnitt des Mantelbereichs ebenfalls nicht-rund ist.

Bei einer weiteren Ausführungsform des Verfahrens wird der Vorformkern in der geforderten Querschnittsgeometrie gefertigt, wobei im Anschluss daran ein Aufkollabieren eines Mantelrohres mit der nominalen Dotandenkonzentration erfolgt. Hierdurch lässt sich insbesondere das erwähnte konstante Kern-Mantel-Verhältnis über dem Vorformquerschnitt besonders einfach realisieren.

Als Dotand ist insbesondere Fluor oder eine Fluorverbindung vorgesehen. Dieser senkt die Brechzahl des Mantelbereiches ab.

Die Mantelschicht der Vorform eine nominale Dotandenkonzentration auf, die im Vergleich zu einer effektiven Dotandenkonzentration einer Vorform für einen Lichtwellenleiter mit runder Kerngeometrie und identischer numerischer Apertur, erhöht ist.

Die nominale Dotandenkonzentration ist insbesondere größer oder gleich der effektiven Dotandenkonzentration multipliziert mit einem geometrischen, mindestens die Querschnittsform des Kerns beschreibenden Korrekturfaktor.

Bei einer Ausführungsform besteht der Kern aus einem undotiertem Quarzglas mit einem Querschnitt in Form eines regelmäßigen Sechsecks, wobei in der Mantelschicht ein erster Mantelbereich mit einer Fluorkonzentration zwischen 2 und 8 Gewichts-% und ein weiterer spannungserzeugender Mantelbereich aus einem undotierten Quarzglas vorgesehen ist.

Bei einer Ausführungsform der Vorform ist das Verhältnis des Kerndurchmessers zum Durchmesser des spannungserzeugenden Mantelbereichs größer als 2,5, bevorzugt größer als 4 und besonders bevorzugt größer als 5,8.

Nachfolgend sollen das Verfahren und die Vorform anhand beispielhafter Ausführungsformen näher erläutert werden. Zur Verdeutlichung dienen die beigefügten Figuren 1 bis 3. Es werden für gleiche bzw. gleichwirkende Teile dieselben Bezugszeichen verwendet.

Es zeigt:

Fig. 1    eine erläuternde Darstellung einer Kerngeometrie mit regelmäßig sechseckigem Querschnitt in Verbindung mit wichtigen geometrischen Parametern,

Fig. 2    eine Darstellung eines Querschnitts einer Vorform mit einem Kern mit einem sechseckigen Querschnitt, einem Cladding und einer Sperrschicht,

Fig. 3    eine Darstellung eines Vorformquerschnittes mit einem nichtrunden Kern und einem konstanten Kern-Mantel-Verhältnis.

Das Verfahren beruht darauf, dass in Abhängigkeit von der geforderten Kerngeometrie eine Dotandenkonzentration bestimmt wird, mit der die NA-senkenden Effekte der nicht-runden Kerngeometrie kompensiert werden können und somit die gewünschte NA am finalen Lichtwellenleiter realisiert werden kann. Dazu werden als Parameter vorwiegend die Eckenanzahl, die Seitenverhältnisse, die Eckenverrundung sowie durch weitere Mantelschichten erzeugte Spannungen berücksichtigt. Weiterhin muss gegebenenfalls auch das Coating berücksichtigt werden, mit welchem eine aus der Vorform gezogene Faser überzogen werden soll. Unter Berücksichtigung dieser Parameter kann bestimmt werden, welche Dotandenkonzentration im Mantelbereich der Vorform vorliegen muss. Nachfolgend wird dies beispielhaft anhand einer Dotandenkonzentration erläutert, bei der als Dotand Fluor bzw. eine Fluorverbindung verwendet wird.

Ausgehend davon können beispielsweise bei einer Direktbeschichtung mittels POVD (plasma outside vapor deposition) oder der Herstellung eines Mantelrohres für einen Jacketingprozess die Vorgaben für das Beschichtungsmaterial im Plasmastrom bzw. das Material des Mantelrohres derart gewählt werden, dass eine Fluorkonzentration vorliegt, die bei einem runden Kern zu einer erhöhten NA führen würde, aber durch die Verlusteffekte bei einer nichtrunden Kerngeometrie allerdings den geforderten NA-Zielwert ergibt.

In einer Ausführungsform des Verfahrens wird ein undotierter Kern verwendet, der in Form eines regelmäßigen 6-Ecks ausgebildet ist. Weiterhin wird ein Fluor dotiertes Rohr hergestellt, dass eine Fluorkonzentration zwischen 2 und 8 wt%, bevorzugt zwischen 5 und 7 wt% aufweist. Dieses Fluorrohr wird auf den Kernstab aufkollabiert. Anschließend wird eine spannungserzeugende Schicht auf den Fluor dotierten Mantelbereich aufgebracht. Dabei hat es sich als günstig erwiesen, wenn der spannungserzeugende Mantelbereich einen Außendurchmesser von mehr als das 2,5-fache bevorzugt mehr als das 4-fache und besonders bevorzugt mehr als das 5,8-fache des Kerndurchmessers ist.

In einer weiteren Ausführungsform wird ein quadratischer Kernstab mit einer Fluor-dotierten Mantelschicht umgeben. Dabei wird die Fluorkonzentration so eingestellt, dass an einer runden Kerngeometrie eine numerische Apertur von 0.20 zu erwarten ist. Beim Verziehen dieser Vorform zu einer Faser wird im Anfangsbereich das Faserzuges eine so hohe Ziehtemperatur gewählt, dass auf Grund der Oberflächenspannung aus der quadratischen Vorform eine beinahe runde Faser gezogen wird. Eine NA-Messung an dieser Faser bestätigte den Zielwert von 0.20. Beim Verziehen der Vorform mit verringerter Ziehtemperatur und Erhaltung der nicht-runden Kerngeometrie wurde eine NA von 0.16 erreicht.

Nachfolgend soll die Ermittlung der nominalen Dotandenkonzentration des Mantelbereichs genauer erläutert werden. Als Beispiel wird die nominale Dotandenkonzentration anhand einer nominalen Fluorkonzentration dargestellt. Die nachfolgenden Erläuterungen sind dann im Rahmen fachmännischen Handelns auch auf andere Dotanden übertragbar.

In Abhängigkeit von der Kerngeometrie wird somit eine Fluorkonzentration bestimmt, die die NA-senkenden Effekte der Lichtwellenleitergeometrie kompensiert und somit die gewünschte NA am finalen Lichtwellenleiter ergibt. Dazu werden als Parameter vorwiegend die Eckenanzahl, die Eckenverrundung sowie durch weitere Mantelschichten erzeugte Spannungen berücksichtigt.

Bei einer genaueren Ausführung des Verfahrens wird auch das Coating berücksichtigt, mit welchem die aus der Vorform gezogene Faser überzogen werden soll. Unter Berücksichtigung dieser Parameter kann bestimmt werden, welche Fluorkonzentration im Mantelbereich der Vorform vorliegen muss.

Anschließend können bei beispielsweise einer Direktbeschichtung mittels POVD (plasma outside vapor deposition) oder der Herstellung eines Mantelrohres für einen Jacketingprozess die entsprechenden Vorgaben derart gewählt werden, dass eine Fluorkonzentration realisiert wird, die bei einem runden Kern zu einer erhöhten NA führen würde, aber die durch die Verlusteffekte bei einer nicht-runden Kerngeometrie schließlich den gewünschten NA-Zielwert ergibt. Somit wird so vorgegangen, dass eine im Vergleich zum Fluorgehalt einer Vorform für einen Lichtwellenleiter mit runder Kerngeometrie und identischer NA genau berechnete erhöhte Fluor-konzentration verwendet wird.

Es wird also eine numerische Apertur für den Lichtwellenleiter vorgegeben, diese wird entsprechend in die effektive Fluorkonzentration umgerechnet und daraus kann in Abhängigkeit des Designs des Lichtwellenleiters dann die nominale Fluorkonzentration bestimmt werden. Diese nominale Fluorkonzentration wird während der Fertigung als Vorgabe verwendet.

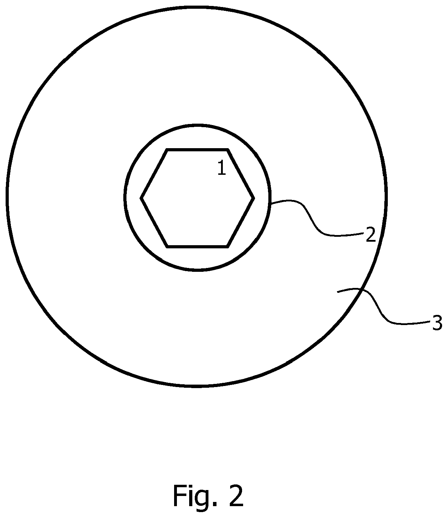

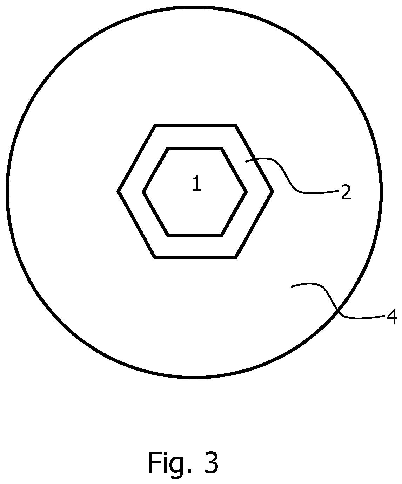

Die zu fertigenden Designs der Vorformen und Lichtwellenleiter können unterschiedlich sein. Sie müssen zur Bestimmung der nominalen Fluorkonzentration jeweils in Betracht gezogen werden. Fig. 2 zeigt beispielsweise ein Design mit einem Kern 1, einem Mantel 2 und einer Sperrschicht 3. Fig. 3 zeigt einen Aufbau mit einem Kern 1, einem Mantel 2 und einem umgebenden Coating 4. Der Mantel wird in den nachfolgenden Ausführungen auch als Cladding bezeichnet. Bei den nachfolgenden Erläuterungen wird jeweils auf die entsprechenden Figuren Bezug genommen.

Die notwendige Erhöhung der Fluorkonzentration kann durch einen Faktor F beschrieben werden. Dieser Faktor setzt sich aus verschiedenen Bestandteilen zusammen und wird beispielsweise wie folgt berechnet:

$$F = V \cdot (1 + (C - 1) \cdot N) \cdot (1 + (S - 1) \cdot N)$$

Dabei gibt V die Eckenverrundung, C den Einfluss eines Coatings und S den Einfluss einer Sperrschicht an. N beschreibt die Eckenanzahl des Kerns. In den meisten Fällen sind die beiden Parameter C und S deutlich kleiner als V, so dass näherungsweise nur V berücksichtigt werden muss.

Der Parameter C kann wie folgt berechnet werden:

$$C = \frac{1}{1 - (NA_{Coating} - NA_{Cladding})^3}$$

Wobei die numerischen Aperturen $NA_{coating}$ und $NA_{Cladding}$ für das Coating und das Cladding einzusetzen sind. Der Begriff Cladding wird im Folgenden als Synonym für den Begriff Mantelbereich verwendet.

Dieser Zusammenhang gilt nur dann, wenn das Coating eine optische Funktion hat, bei der $NA_{Coating} > NA_{Cladding}$ gilt. Wenn die numerische Apertur des Coatings kleiner oder gleich der numerischen Apertur des Claddings ist, so wird der Faktor C = 1 gesetzt. Die numerische Apertur des Coatings und/oder des Claddings wird immer in Bezug auf den lichtführenden Kern angegeben.

Der Parameter S kann aus der folgenden Beziehung bestimmt werden:

$$S = 1 + (CTE_S - CTE_C)^{SCV}$$

Dabei beschreibt $CTE_S$ den thermischen Ausdehnungskoeffizienten der Sperrschicht und $CTE_C$ den thermischen Ausdehnungskoeffizienten des Claddings. SCV ist das so genannte Sperrschicht-Cladding-Verhältnis. Die thermischen Ausdehungskoeefizienten $CTE_S$ und $CTE_C$ sind von der Zusammensetzung der Sperr- und/oder Claddingschicht abhängig und können der Literatur entnommen werden. Sofern keine Sperrschicht vorhanden ist, wird der Parameter S zu 1 gesetzt. Das SCV kann berechnet werden, indem der Außendurchmesser der Sperrschicht durch den Außendurchmesser des Claddings dividiert wird.

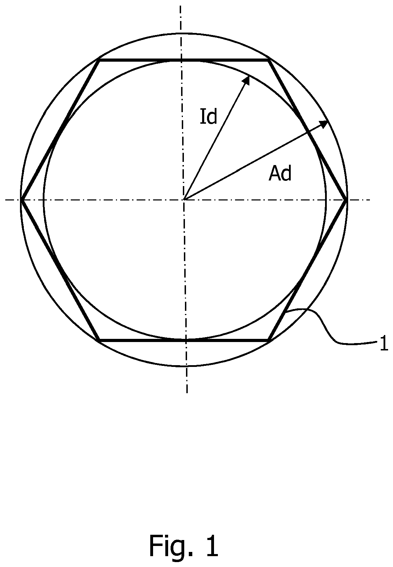

Für die Bestimmung der Fluor-Konzentration spielt die Eckenanzahl N und die damit verbundene Eckenverrundung eine wesentliche Rolle. Die hierfür maßgeblichen Parameter sind in Fig. 1 gezeigt. Die Eckenverrundung V kann, insbesondere für einen nicht-runden Kern in Form eines regelmäßigen N-Ecks, wie folgt berechnet werden:

$$V = 1 - \frac{Ad/Id - 1}{1/\cos(180/N) - 1}$$

Ad beschreibt dabei den Außendurchmesser, des dem N-Ecks umbeschriebenen Kreises. Id beschreibt den Innendurchmesser des dem N-Ecks einbeschriebenen Kreises. Der Parameter der Eckenverrundung V ist ein Maß dafür, um wieviel die erreichte Form des nicht-runden Lichtleiterkerns von der idealen Form eines Polygons abweicht und in die eines Kreises übergeht. Für ein perfektes Polygon ist die Eckenverrundung identisch Null, wachsende Werte für V zeigen an, dass die ideale Polygonform zunehmend in die eines Kreises übergeht, wobei insbesondere die Seiten des Polygons zunehmend bogenförmig verlaufen.

Dieser Zusammenhang gilt für beliebige regelmäßige N-Ecke. Die Anzahl der Ecken soll dabei kleiner als 100, bevorzugt kleiner als 20 und besonders bevorzugt kleiner als 8 sein. Auf Grund von Produktionstoleranzen gelten auch N-Ecke als regelmäßig im erfindungsgemäßen Sinne, wenn die Innenwinkel um weniger als 10% voneinander abweichen. Bei N-Ecken mit ungleichmäßig langen Kanten (z.B. Rechtecken) kann für die Bestimmung der Eckenverrundung V die Länge der einzelnen Kanten auf einen einheitlichen Wert angepasst und dann die Eckenverrundung V bestimmt werden. In der Regel wird hierzu auf die Länge der kürzesten Kante zurückgegriffen. Für eine Kerngeometrie mit endlicher Eckenanzahl ergibt sich eine theoretisch mögliche minimale Eckenverrundung von 0. Diese kann durch suboptimale Prozessführung beim Aufbringen der Mantelschicht erhöht werden.

In bestimmten Fällen kann es auch notwendig sein, eine bestimmte Eckenverrundung einzustellen. Diese kann durchaus auch größer als die minimale Eckenverrundung sein. In Abhängigkeit der zu erwartenden Eckenverrundung kann dann entsprechend der NA-Verlust ermittelt und bei der Vorgabe der Fluorkonzentration der Mantelschicht kompensiert werden.

Für die Einstellung der Fluorkonzentration während der Fertigung der Vorform ergibt sich somit insgesamt folgender Zusammenhang:

$$c_{eff} \cdot F \leq c_{nom}$$

mit der effektiven Fluorkonzentration $c_{eff}$ und der nominalen Fluorkonzentration $c_{nom}$. Das bedeutet, dass die nominale Fluorkonzentration als eine obere Grenze für die bei der Prozessführung der Vorformherstellung tatsächlich verwendete Fluorkonzentration aufzufassen ist, sofern eine bestimmte numerische Apertur als Ziel vorgegeben ist.

Für einen direkten Nachweis des Unterschiedes zwischen effektiver und nominaler Fluorkonzentration an dem fertigen Lichtwellenleiter können zwei Messungen ausgeführt werden. Zum einen kann die effektive Fluorkonzentration direkt aus der numerischen Apertur NA des Lichtwellenleiters bestimmt werden. Hierzu wird die NA optischen gemessen, wobei von diesem Wert kann auf eine Brechzahldifferenz zurückgerechnet werden kann. Aus dieser Brechzahldifferenz lässt sich dann die für den Lichtwellenleiter effektive Fluorkonzentration berechnen, die letztlich die Lichtausbreitung in der Anordnung des Lichtwellenleiters bestimmt. Im Gegensatz dazu kann die nominale Fluorkonzentration durch spektroskopische Messungen ermittelt und somit mit der effektiven Fluorkonzentration verglichen werden.

Auf Grund der nicht-runden Kerngeometrie kann in Abhängigkeit des gewählten Verfahrens zum Aufbringen des Mantelbereiches eine Ungleichmäßigkeit der Schichtdicke des Mantelbereichs auftreten. Es ist eine minimale Schichtdicke sicherzustellen, die aufgebracht werden muss und die von der zu übertragenden Wellenlänge abhängt. Wird diese Schichtdicke unterschritten, funktioniert die Wellenleitung nicht wie gewünscht und es treten sehr hohe Dämpfungen auf. Wird die minimale Schichtdicke aufgebracht, kommt es zu Verlusten aus den oben genannten Effekten.

Weiterhin kann die Mantelschichtstärke durch eine nicht-runde Mantelgeometrie optimiert werden. Wenn bei einer 6-eckigen Kerngeometrie eine runde Mantelschicht wird, ändert sich dabei zwangsläufig das so genannte clad to core diameter ratio.

Im Bereich der flachen Seiten eines beispielsweise sechseckigen Kerns liegt ein vergleichsweise dickes Cladding und somit ein sehr großes CCDR (clad to core diameter ratio) vor, während in den Eckbereichen notwendigerweise das Cladding dünner und somit das CCDR geringer ist. Die Sicherstellung einer minimalen Mantelschichtdicke in den Eckbereichen des Kerns muss somit durch ein großes CCDR in den Seitenbereichen des Kerns erkauft werden.

Daher kann es sich als vorteilhaft erweisen, wenn die Mantelgeometrie an die Kerngeometrie angepasst ausgeführt wird. Ein Beispiel ist hierzu in Fig. 3 gezeigt. Dargestellt ist hier ein Aufbau aus einem Kern 1, einem Cladding 2 und einem umgebenden Coating 4. Wird auf den 6-eckigen Kern ein 6-eckiger Mantel 2 aufgebracht, so ist das CCDR an allen Stellen gleich groß und der Materialaufwand erheblich geringer. Eine nicht-runde Mantelgeometrie kann sich auch als vorteilhaft erweisen, wenn die Fasern später zu Faserbündeln weiter verarbeitet werden sollen, weil damit die Zwischenräume zwischen einzelnen Fasern bei der Bündelfertigung deutlich reduziert werden können. Daraus ergibt sich eine bessere Verarbeitbarkeit während der Bündelfertigung. Da kaum hohle Zwischenräume vorhanden sind, wird auch die Fasergeometrie beim Verschmelzen vieler Einzelfasern zum Bündel wesentlich besser erhalten.

Für die Fertigung von Faserbündeln können auch Fasern verwendet werden, die durch geeignete Wahl der Kern- und Mantelmaterialien und optimierte Prozessbedingungen besonders stabil gegen elektromagnetische Strahlung sind. Dabei wird insbesondere eine Resistenz gegen ultraviolette- oder höherenergetische Strahlung wie Röntgen- oder Gamma-Strahlung eingestellt.

In einer Ausführungsform wird ein undotierter Kern verwendet, der in Form eines regelmäßigen 6-Ecks ausgebildet ist. Weiterhin wird ein mit Fluor dotiertes Rohr hergestellt, dass eine Fluorkonzentration zwischen 2 und 8 wt% aufweist. Dieses Fluorrohr wird auf den Kernstab aufkollabiert. Anschließend wird ein spannungserzeugender Mantelbereich auf den mit Fluor dotierten Mantelbereich aufgebracht. Dabei hat es sich als günstig erwiesen, wenn der spannungserzeugende Mantelbereich einen Außendurchmesser von mehr als das 2,5-fache, bevorzugt mehr als das 4-fache und besonders bevorzugt mehr als das 5,8-fache des Kerndurchmessers ist.

In einer zweiten Ausführungsform wird ein dotierter Kern verwendet. Als Dotanden können sowohl brechzahlerhöhende (z.B. Germanium, Phosphor, Aluminium oder Lanthanide) als auch brechzahlabsenkende (z.B. Fluor oder Bor) verwendet werden. Der Querschnitt des Kerns kann quadratisch, rechteckig, hexagonal oder auch oktogonal ein. Neben diesen am häufigsten verwendeten Formen sind aber beliebige Vielecke oder andere Formen, z.B. eine D-Struktur, eine Doppel-D oder eine W-Struktur möglich. Um das dotierte Kernmaterial, das in einer nicht-runden Form vorliegt, wird ein Mantel aufgebracht.

Der Mantel kann undotiert sein, oder mit brechzahlverändernden Dotanden dotiert sein. In den meisten Fällen wird der Mantelbereich undotiert oder F-dotiert ausgeführt. Durch eine F-Dotierung im Mantel kann die Brechzahldifferenz zwischen Kern und Mantel weiter erhöht werden, so dass dadurch die NA erhöht werden kann.

In einer weiteren Ausführungsform wurde ein quadratischer Kernstab mit einer Fluor dotierten Mantelschicht umgeben. Dabei wurde die Fluorkonzentration so eingestellt, dass an einer runden Kerngeometrie eine numerische Apertur von 0.20 erzielt worden wäre. Beim Verziehen dieser Vorform zu einer Faser wurde im Anfangsbereich das Faserzuges eine so hohe Ziehtemperatur gewählt, dass auf Grund der Oberflächenspannung aus der quadratischen Vorform eine beinahe runde Faser gezogen worden ist. Eine NA-Messung an dieser Faser bestätigte den Zielwert von 0.20. Beim Verziehen der Vorform mit verringerter Ziehtemperatur und Erhaltung der nicht-runden Kerngeometrie wurde eine NA von 0.16 erreicht. Daraus folgt, dass die Eckenverrundung der Vorform beim Faserziehen nicht notwendigerweise erhalten bleiben muss. Durch hohe Ziehtemperaturen kann die Eckenverrundung erhöht werden.

Es kann somit ausgehend von einer Vorform mit bekannter Eckenverrundung durch geeignete Wahl der Ziehparameter eine gewünschte Eckenverrundung eingestellt werden, die größer als die Eckenverrundung der Vorform ist. Somit kann aus einer Vorform ein bestimmtes Produktspektrum mit verschiedenen Eckenverrundungen hergestellt werden.

In einer anderen Ausführungsform wird die unrunde Faser unter speziellen Ziehbedingungen gefertigt, so dass die Strahlungsbeständigkeit verbessert werden kann. Unter Strahlungsbeständigkeit soll die Eigenschaft der Faser verstanden werden, bei Bestrahlung mit Licht im Spektralbereich von 150 bis 2700nm, wobei der Spektralbereich von 150 bis 650nm besonders und der Bereich von 200 bis 270nm am meisten Einfluss auf die Solarisationsbeständigkeit hat, nur eine sehr geringe Abnahme der Transmission aufzuweisen. Unter Standardbedingungen gezogene Fasern weisen bei Bestrahlung mit UV-Licht einen Abfall der Transmission auf unter 20% der Ursprungstransmission auf. Durch geeignet gewählte Ziehbedingungen kann dieser Wert auf mehr als 50% bevorzugt mehr als 70% und besonders bevorzugt mehr als 90% gesteigert werden.

Ein wesentlicher Parameter, um diese Transmissionsverbesserung zu erreichen, besteht in der Verringerung der Ziehgeschwindigkeit. Je langsamer die Faser gezogen wird, umso langsamer kühlt die Faser ab und damit wird die Dauer erhöht, in der sich strukturelle Defekte in der Glasstruktur ausheilen können. Durch die langsame Ziehgeschwindigkeit wird die Aufenthaltsdauer im heißen Ziehofen erhöht, so dass auch hier schon Defektausheilungen stattfinden können.

Dieser Effekt kann dadurch verstärkt werden, dass Preformen mit möglichst großem Durchmesser verzogen werden, so dass dadurch die Nachschubgeschwindigkeit reduziert und die Aufenthaltsdauer im Ziehofen erhöht wird. Ziehgeschwindigkeiten von weniger als 20 m/min, bevorzugt weniger als 10 m/min und besonders bevorzugt weniger als 5 m/min, haben sich als besonders vorteilhaft herausgestellt.

Die Fasern mit unrunden Kernen können als Einzelfasern verwendet werden, allerdings ist auch eine Verwendung in Faserbündeln möglich. Insbesondere bei Fasern, bei denen nicht nur der Kern eine unrunde Geometrie hat, sondern auch der Mantel in polygonaler Form ausgebildet wird. Die Packungsdichte von Faserbündeln mit unrunden Außengeometrien ist im Vergleich zu runden Fasern höher. Dadurch wird auch die lichtleitende Fläche erhöht und das Bündel weist einen geringeren Anteil an nicht lichtleitenden Bereichen auf.

In einer Ausführungsform wird ein rechteckiger Kern verwendet. Die Seitenverhältnisse können prinzipiell frei gewählt werden. Dabei gibt es allerdings bestimmte Grenzen, die vom verwendeten Herstellungsverfahren abhängen. Wird die Mantelschicht mit einem Jacketingverfahren aufgebracht, wird in Abhängigkeit des Seitenverhältnisses die Geometrie des Jacketingrohres bestimmt. Je größer das Seitenverhältnis ist, umso ovaler wird das Rohr gefertigt, um einen möglichst gleichmäßigen Spalt zwischen Rohr und Preform einzuhalten. In einer Weiterentwicklung dieses Verfahrens wird die Innengeometrie des Rohres an die Außengeometrie des Substrates angepasst. Dabei werden beispielsweise Rohre mit polygonalen Innengeometrien hergestellt und diese auf entsprechende Substrate aufkollabiert. Dabei sind die Spaltmaße zwischen Substrat und Rohr über den kompletten Substratumfang nahezu identisch, so dass beim Jacketing keine Materialverschiebungen oder Blasen in der Grenzfläche auftreten.

In einer weiteren Ausführungsform wird das Cladding mit zwei unterschiedlichen Brechzahlen hergestellt, sodass ein inneres und ein äußeres Cladding entsteht. Dabei weist das innere Cladding eine höhere Brechzahl als das äußere Cladding auf, wobei beide Brechzahlen kleiner als die Kernbrechzahl sind. Durch das Verhältnis der Brechzahlen zwischen innerem und äußerem Cladding kann die numerische Apertur gezielt beeinflusst und eingestellt werden. Dabei kann die Schichtdicke des inneren Claddings auch dazu genutzt werden, den Effekt des inneren Claddings zu verstärken oder abzuschwächen. Durch das Aufbringen des äußeren Claddings kann nach dem Aufbringen des ersten inneren Claddings über ein Einstellen des Dickenverhältnisses zwischen innerem und äußeren Cladding noch eine Optimierung der numerischen Apertur erreicht werden , ohne das innere Cladding komplett entfernen zu müssen.

Somit kann ein Muttersubstrat mit einem inneren Cladding hergestellt werden und dann in Abhängigkeit der gewünschten numerischen Apertur am Endprodukt mit einem zweiten äußeren Cladding versehen werden, so dass die gewünschten Parameter am Endprodukt erhalten werden. Durch die Verwendung eines Muttersubstrates, dass für verschiedene Zielwerte verwendet werden kann, wird der Fertigungsaufwand und die -zeit deutlich reduziert. Es kann auch für die Herstellung des Muttersubstrates auf sehr große Substrate zurückgegriffen werden, was die Bearbeitungskosten, die z.B. durch ein Schleifen oder ein Polieren der Oberfläche entstehen, im Verhältnis zur Masse des Finalproduktes minimiert. Durch den vergrößerten Spielraum bei der Gestaltung der Vorform, der durch das zweite Cladding ermöglicht wird, muss allerdings nicht der komplette Mutterstab für ein bestimmtes Produktdesign verwendet werden. Vielmehr kann zunächst eine größere Serie gefertigt werden, von der kleinere, speziell gestaltete Teilmengen für unterschiedliche Endprodukte abgeteilt und getrennt unterschiedlich weiterbearbeitet werden. Damit können auch geringe Mengen von Endprodukten sehr effizient hergestellt werden, da letztlich immer nur auf einen Mutterstab zurückgegriffen werden muss.

Die in den Ausführungsbeispielen genannten Konzepte sind nicht auf spezielle Außendurchmesser des Halbzeuges oder Endproduktes eingeschränkt. Die Vorformen können Durchmesser von mehr als 15 mm haben, wobei bevorzugt ein Bereich von 20 bis 50 mm und besonders bevorzugt ein Bereich zwischen 25 und 35 mm, hergestellt wird. In diesem Durchmesserbereich können die notwendigen Bearbeitungsschritte bei im Vergleich zu deutlich dickeren Vorformen geringeren Temperaturen ausgeführt werden. Dies hat sich als vorteilhaft für die Beibehaltung der Eckigkeit des Kernbereiches herausgestellt.

Die Fasern aus den hier beschriebenen Vorformen weisen in der Regel Außendurchmesser bis 1200 $\mu$m auf, wobei ein Durchmesserbereich von 75 bis 600 $\mu$m bevorzugt und ein Bereich zwischen 200 und 500 $\mu$m besonders bevorzugt ist. Es können allerdings auch Vorformen auf größere Durchmesser gezogen oder gestreckt werden, so dass das Endprodukt keine Faser ist, sondern ein lichtleitendes Stäbchen. Dabei sind Durchmesser von 1,2 bis 15 mm möglich, wobei der Bereich zwischen 2 und 6 mm bevorzugt und der Bereich zwischen 2,5 und 3,5 mm besonders bevorzugt wird.

Das erfindungsgemäße Verfahren und die so hergestellte Vorform wurden anhand von Ausführungsbeispielen näher erläutert. Im Rahmen fachmännischen Handelns sind weitere Ausführungsformen möglich. Diese ergeben sich aus den Unteransprüchen.

**Patentansprüche**

1. Verfahren zur Fertigung einer Vorform für einen Lichtwellenleiter mit einer vorgegebenen numerischen Apertur, enthaltend einen Mantelbereich und einen Vorformkern mit einem polygonalen Querschnitt, mit den Verfahrensschritten

   - Ermitteln einer effektiven Dotandenkonzentration des Mantelbereichs für den zu fertigenden Lichtwellenleiter aus der vorgegebenen numerischen Apertur,
   - Einstellen einer nominalen Dotandenkonzentration bei der Fertigung des Mantelbereichs, wobei die nominale Dotandenkonzentration aus der effektiven Dotandenkonzentration in Abhängigkeit von den Faseraufbau des Lichtwellenleiters beschreibenden geometrischen Parametern, insbesondere einer vorgesehenen Kerngeometrie des Lichtwellenleiters und/oder mechanischen Parametern des Faseraufbaus des zu fertigenden Lichtwellenleiters errechnet wird,
   - Herstellen des Vorformkerns mit der vorgesehenen Geometrie des Kernquerschnitts der Vorform,
   - Umgeben des Vorformkerns mit einem Mantelbereich der Vorform mit der nominalen Dotandenkonzentration,
   **dadurch gekennzeichnet, dass**
   die effektive Dotandenkonzentration $c_{eff}$ und die nominale Dotandenkonzentration $c_{nom}$ und der Skalierungsfaktor F über die folgende Beziehung verknüpft sind : $c_{eff} \cdot F \leq c_{nom}$
   wobei der Skalierungsfaktor F mit einer Parametermenge V, C, S und N

$$F = V \cdot (1 + (C-1) \cdot N) \cdot (1 + (S-1) \cdot N)$$

   berechnet wird, wobei V ein Maß für eine Eckenverrundung, C einen Einfluss eines Coatings des Lichtwellenleiters, N eine Eckenanzahl des Kerns und S einen Einfluss einer Sperrschicht beschreibt.

**2.** Verfahren nach Anspruch 1,
**dadurch gekennzeichnet, dass**
die nominale Dotandenkonzentration im Vergleich zur effektiven Dotandenkonzentration erhöht wird, wobei zum Ermitteln des Grades der Erhöhung der effektiven Dotandenkonzentration auf die nominale Dotandenkonzentration eine Auswertung eines eine Eckenverrundung V des polygonalen Querschnitts beschreibenden Parameter ausgeführt wird.

**3.** Verfahren nach Anspruch 1,
**dadurch gekennzeichnet, dass**
die nominale Dotandenkonzentration im Vergleich zur effektiven Dotandenkonzetration erhöht ist, wobei die Erhöhung der Dotandenkonzentration zusätzlich zu dem Parameter der Eckenverrundung V aus einer Eckenanzahl N sowie einem einen Einfluss eines vorgesehenen Coatings beschreibenden Parameter C und einem einen Einfluss einer Sperrschicht beschreibenden Parameter S bestimmt wird.

**4.** Verfahren nach Anspruch 3,
**dadurch gekennzeichnet, dass**
der Parameter S des Einflusses der Sperrschicht aus den thermischen Ausdehnungskoeffizienten $CTE_S$ des Materials der Sperrschicht und des thermischen Ausdehnungskoeffizienten $CTE_C$ des Claddings des herzustellenden Lichtwellenleiters bestimmt wird.

**5.** Verfahren nach Anspruch 2,
**dadurch gekennzeichnet, dass**
der Parameter V der Eckenverrundung aus einem den polygonalen Querschnitt einbeschreibenden Außendurchmesser Ad, einem in den polygonalen Querschnitt einbeschriebenen Innendurchmesser Id und einer Eckenzahl N bestimmt wird.

**6.** Verfahren nach einem der vorhergehenden Ansprüche,
**dadurch gekennzeichnet, dass**
bei dem Herstellen der Vorform auf den polygonalen Vorformkern ein Mantelbereich mit einem an die Querschnittsgeometrie des Vorformkerns angepassten Mantelquerschnitt so aufgebracht wird, dass das Kern-Mantel-Verhältnis über den gesamten Querschnitt der Vorform konstant ist.

**7.** Verfahren nach Anspruch 6,
**dadurch gekennzeichnet, dass**
der Vorformkern in der geforderten Querschnittsgeometrie gefertigt wird, wobei im Anschluss daran ein Aufkollabieren eines Mantelrohres mit der nominalen Dotandenkonzentration erfolgt.

**8.** Verfahren nach einem der vorhergehenden Ansprüche,
**dadurch gekennzeichnet, dass**
als Dotand Fluor oder eine Fluorverbindung vorgesehen ist.

**9.** Verfahren nach Anspruch 1,
**dadurch gekennzeichnet, dass**
der Skalierungsfaktor F identisch mit dem Parameter V der Eckenverrundung ist.

**Claims**

**1.** A method for producing a blank for a light wave conductor with a predetermined numerical aperture including a jacket portion and a blank core with a polygonal cross section, the method comprising the steps:

- determining an effective dopant concentration of the jacket portion for the light conductor to be produced from the predetermined numerical aperture,
- adjusting a nominal dopant concentration when producing the jacket portion wherein the nominal dopant concentration is computed from an effective dopant concentration as a function of geometric parameters describing a fiber configuration of the light wave conductor, in particular a predetermined core geometry of the light wave conductor and/or mechanical parameters of the fiber configuration of the light wave conductor to be produced,

- producing the blank core with the predetermined geometry of the core cross section of the blank,
- surrounding the blank core with a jacket portion of the blank with the nominal dopant concentration, **characterized in that**

the effective dopant concentration $c_{eff}$ and the nominal dopant concentration $c_{nom}$ and the scaling factor F relate to each other as follows: $c_{eff} \times F \leq c_{nom}$
wherein the scaling factor F is computed from the parameters V, C, S and N as follows

$$F = V \times (1 + (C - 1) \times N) \times (1 + (S - 1) \times N)$$

wherein V is a parameter for rounding of the corners, C is a parameter for an influence of a coating of the light wave conductor, N is a number of edges of the core and S defines an influence of a barrier layer.

2. The method according to claim 1,
   **characterized in that**
   the nominal dopant concentration is increased compared to the effective dopant concentration, wherein a processing of a parameter describing a corner rounding V of the polygonal cross section is used in order to determine a degree of increase of the effective dopant concentration to the nominal dopant concentration.

3. The method according to claim 1,
   **characterized in that**
   the nominal dopant concentration is increased compared to the effective dopant concentration, wherein an increase of the dopant concentration is determined in addition to the parameter of the corner rounding V from an edge number N and a parameter C describing an influence of a provided coating and a parameter S describing an influence of a blocking layer.

4. The method according to claim 3,
   **characterized in that**
   the parameter S of the influence of the blocking layer is determined from a thermal expansion coefficient $CTE_S$ of a material of the blocking layer and a thermal expansion coefficient $CTE_C$ of a cladding of the light wave conductor to be produced.

5. The method according to claim 2,
   **characterized in that**
   the parameter V of the corner rounding is determined from an outer diameter $A_d$ enclosing the polygonal cross section, an inner diameter $I_d$ enclosed by the polygonal cross section and a number of corners N.

6. The method according to one of the preceding claims,
   **characterized in that**
   a jacket portion with a jacket cross section adapted to a cross section geometry of the blank core is applied to the polygonal blank core when producing the blank so that a ratio of core to jacket is constant over an entire cross section of the blank.

7. The method according to claim 6,
   **characterized in that**
   the blank core is produced with the required cross section geometry wherein the jacket tube with the nominal dopant concentration is collapsed onto the blank core thereafter.

8. The method according to one of the preceding claims, **characterized in that** the dopant is fluor or a fluor compound.

9. The method according to claim 1, **characterized in that** the scaling factor F is identical with the parameter V of the corner rounding.

**Revendications**

1. Procédé de fabrication d'une préforme pour un guide optique présentant une ouverture numérique donnée, comportant une zone enveloppe et un âme de préforme à section transversale polygonale, comprenant les étapes consistant à

   - détecter une concentration effective de dopants de la zone enveloppe pour le guide optique à fabriquer à partir de l'ouverture numérique donnée,
   - régler une concentration nominale de dopants lors de la fabrication de la zone enveloppe, la concentration nominale de dopants étant calculée à partir de la concentration effective de dopants en fonction de paramètres géométriques décrivant la structure de fibres du guide optique, en particulier en fonction d'une géométrie d'âme prévue du guide optique et/ou en fonction de paramètres mécaniques de la structure de fibres du guide optique à fabriquer,
   - réaliser l'âme de la préforme avec la géométrie prévue de la section transversale de l'âme de la préforme,
   - entourer l'âme de la préforme par une zone enveloppe de la préforme avec la concentration nominale de dopants,

   **caractérisé en ce que**
   la concentration effective de dopants $c_{eff}$ et la concentration nominale de dopants $c_{nom}$ et le facteur d'échelle F sont liés par la relation suivante :

   $$c_{eff} \bullet F \leq c_{nom}$$

   dans lequel on calcule le facteur d'échelle F avec une quantité de paramètres V, C, S et N

   $$F = V \bullet (1 + (C - 1) \bullet N) \bullet (1 + (S - 1) \bullet N)$$

   où V décrit une valeur pour un arrondi d'angle, C décrit une influence d'un revêtement du guide optique, N décrit un nombre d'angles de l'âme et S décrit une influence d'une couche de barrière.

2. Procédé selon la revendication 1,
   **caractérisé en ce que**
   on augmente la concentration nominale de dopants par comparaison à la concentration effective de dopants, et pour déterminer le degré de l'augmentation de la concentration effective de dopants pour passer à la concentration nominale de dopants, on effectue une évaluation d'un paramètre qui décrit un arrondi d'angle V de la section transversale polygonale.

3. Procédé selon la revendication 1,
   **caractérisé en ce que**
   la concentration nominale de dopants est augmentée par comparaison à la concentration effective de dopants, et l'augmentation de la concentration de dopants est définie en supplément au paramètre de l'arrondi d'angle V, à partir d'un nombre d'angles N ainsi que d'un paramètre C qui décrit une influence d'un revêtement prévu et d'un paramètre S qui décrit une influence d'une couche de barrière.

4. Procédé selon la revendication 3,
   **caractérisé en ce que**
   on définit le paramètre S de l'influence de la couche de barrière à partir des coefficients de dilatation thermiques CTEs du matériau de la couche de barrière et du coefficient de dilatation thermique $CTE_C$ du gainage du guide optique à fabriquer.

5. Procédé selon la revendication 2,
   **caractérisé en ce que**
   on définit le paramètre V de l'arrondi d'angle à partir d'un diamètre extérieur Ad inscrivant la section transversale polygonale, d'un diamètre intérieur Id inscrit dans la section transversale polygonale et d'un nombre d'angles N.

**6.** Procédé selon l'une des revendications précédentes,
**caractérisé en ce que**
lors de la fabrication de la préforme, on applique sur l'âme polygonale de la préforme une zone enveloppe présentant une section transversale d'enveloppe adaptée à la géométrie de section transversale de l'âme de la préforme, de telle sorte que le rapport âme/enveloppe est constant sur toute la section transversale de la préforme.

**7.** Procédé selon la revendication 6,
**caractérisé en ce que**
on fabrique l'âme de la préforme dans la géométrie requise de la section transversale, et à la suite on procède à un affaissement d'un tube enveloppe avec la concentration nominale de dopants.

**8.** Procédé selon l'une des revendications précédentes,
**caractérisé en ce que**
on prévoit en tant que dopant du fluore ou un composé fluoré.

**9.** Procédé selon la revendication 1,
**caractérisé en ce que**
le facteur d'échelle F est identique au paramètre V de l'arrondi d'angle.

Fig. 1

Fig. 2

Fig. 3

**IN DER BESCHREIBUNG AUFGEFÜHRTE DOKUMENTE**

**In der Beschreibung aufgeführte Patentdokumente**

- US 4859223 A
- US 5566267 A
- DE 102009004756 A1
- DE 102013202589 A1
- US 8655130 B
- WO 14023799 A